# EUROPEAN PATENT SPECIFICATION

(11) **EP 3 130 508 B1**
(45) Date of publication and mention of the grant of the patent: **13.06.2018**
(21) Application number: 16001742.2
(22) Date of filing: 05.08.2016
(51) Int. Cl.: B60R 9/10

(54) **SUNROOF-TYPE BICYCLE CARRIER**
FAHRRADTRÄGER VOM SONNENDACHTYP
SUPPORT DE BICYCLETTE DE TYPE TOIT OUVRANT

(30) Priority: 14.08.2015 IT UB20153127
(43) Date of publication of application: 15.02.2017
(73) Proprietor: Aurilis Group Italia S.R.L., 12045 Fossano (CN) (IT)
(72) Inventor: Gemesio, Matteo, 12045 Fossano (CN) (IT)
(74) Representative: Garavelli, Paolo

(56) References cited:
- EP-A1- 1 092 592
- FR-A1- 2 645 221
- US-B1- 6 431 423

## Description

The present invention refers to a bicycle carrier adapted to transport bicycles on the sunroof of cars. In particular, it refers to a device for keeping bicycles in a vertical position, in order to allow fastening them having both hands free.

There are various devices for transporting bicycles on cars. The devices which can be assembled on sunroofs have the advantage, with respect to those assembled on the rear door, of not having to widen the overall area of the car and of not impairing the access to the baggage compartment. On the contrary, sunroof-type bicycle carriers have inconveniences due to the fact that they are applied to the car sunroof. This happens above all due to the fact that prior art sunroof-type bicycle carriers compel to keep the bicycle in a vertical position while this latter one is fastened. This means that, in order to easily operate, two people are necessary, since, otherwise, it is necessary to keep the bicycle with one hand and operate on the fastening devices with another hand. As can be easily understood, this way of operating is certainly scarcely easy and there is always the risk of dropping the bicycle and making it ruinously fall on the ground, with the risk of accidents and/or damages to the car and the bicycle itself. EP1092592 A1 describes a bicycle-carrier according to the preamble of claim 1. The present invention solves at least partly the above problem, by providing a bicycle carrier, according to Claim 1, adapted to transport bicycles on a car sunroof, of the type comprising:
- a raceway assembled, through a pair of supports, on a pair of sunroof bars applied to the car sunroof;
- a side arm, oscillating around an axis horizontal and parallel with the sunroof bars;
- catching means placed next to the upper end of the oscillating arm;
wherein the catching means comprise a tightening element adapted to form an undercut, so that, by forcing a cylindrical body against the tightening element, for example a saddle-supporting bar, the tightening element opens and, by elastically closing again onto the cylindrical body, this latter one remains blocked.

In practice, the user will have to lift the bicycle in order to rest the wheels on the raceway, then he will have to place it vertically and press a cylindrical part of the chassis, for example the saddle-supporting tube, against the tightening element. The pressure effect will elastically open wide the tightening element which, when closing again, will block the bicycle in a vertical position.

The tightening element can be made in order to ensure the blocking through the elastic action only, or further blocking means can be provided, to increase the safety. The user, having both his hands free, will anyway be able to easily perform the following locking operations.

It is intended that all enclosed claims are an integral part of the present description.

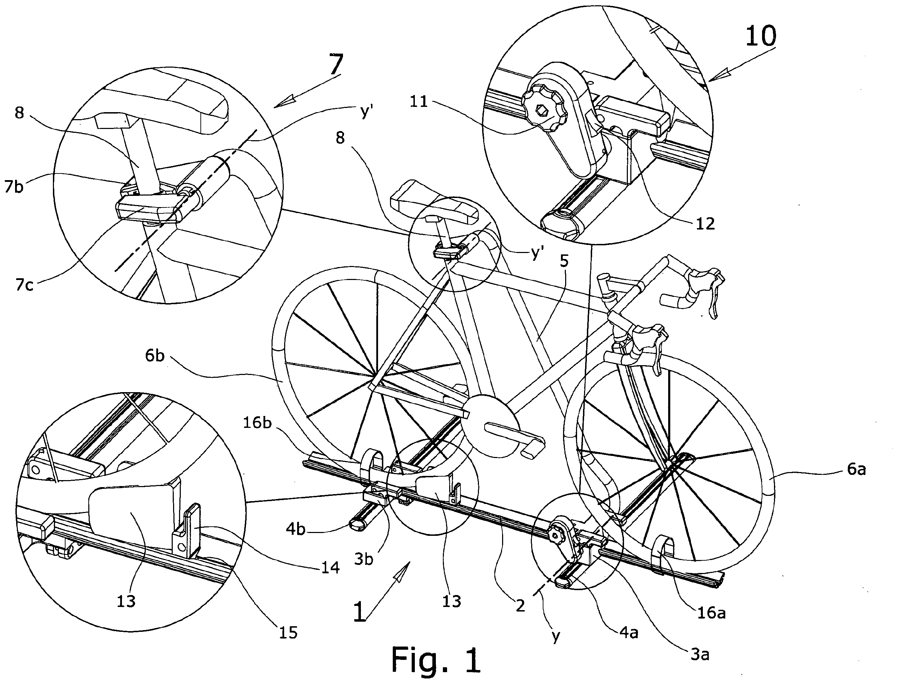

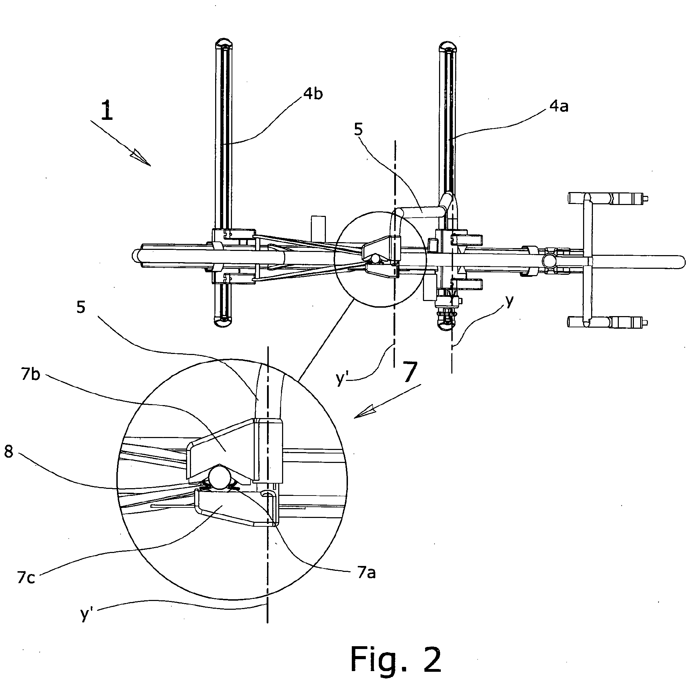

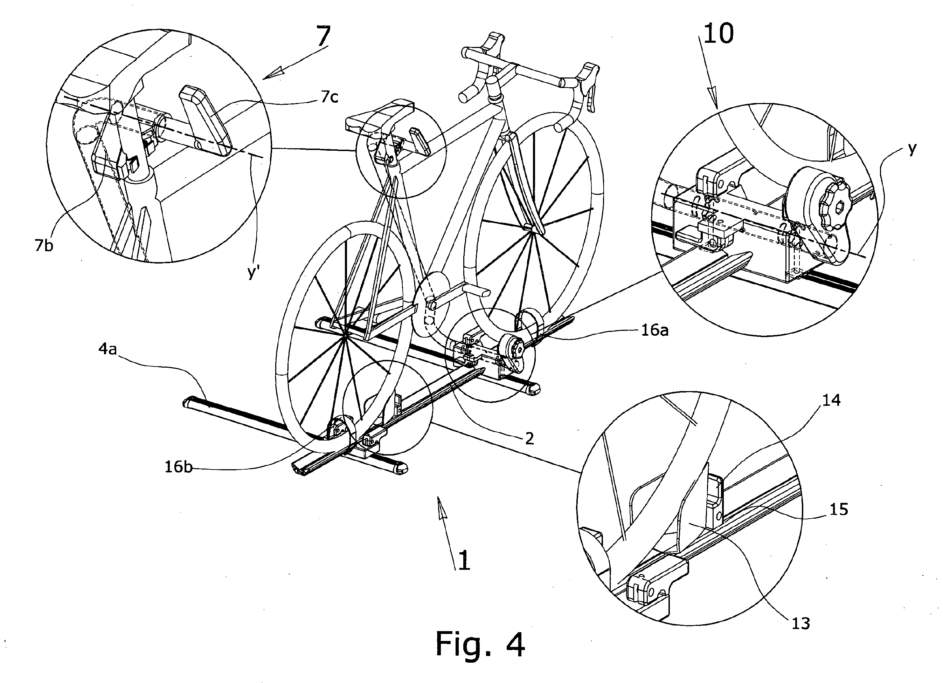

The invention will now be described according to a preferred embodiment and with reference to the enclosed Figures 1 to 4, in which various views are shown of a bicycle assembled on a bicycle carrier according to the invention, of which some enlarged parts are shown.

With reference to the enclosed Figures, (1) designates a bicycle carrier according to the invention.

Such bicycle carrier (1) comprises:
- a raceway (2) assembled, through a front support (3a) and a rear support (3b), on a pair of sunroof bars (4a), (4b), applied to a car sunroof;
- a side arm (5), oscillating around an axis (y) horizontal and parallel with the sunroof bars (4), (4b), preferably placed next to the front support (3a), near the rear wheel (6a) of the bicycle to be transported;
- catching means (7) placed next to the upper end of the oscillating arm (5).

Such side arm (5) comprises a metallic tube with rounded section, curved in order to form an oscillating lateral bearing, in order to be able to adapt it to the bicycle. The tube is then assembled on the front support (3a) which, in turn, is fastened to the front sunroof carrier bar (4a) of a vehicle. The particularity of this tube is having slits, which allow passing the fastening elements (screws, cam-type tie-rods, etc.) through the tube, allowing its rotation. In this way, the tube will have its own rotation axis next to the front sunroof carrier bar (4a), with the advantage of being a very sturdy bearing against lateral thrusts.

The catching means (7) comprise a tightening element (7a) adapted to form an undercut, so that, by forcing a cylindrical body against the tightening element (7a), for example a saddle-supporting tube (8), the tightening element (7a) opens and, by elastically closing again onto the cylindrical body, this latter one remains blocked.

According to a preferred embodiment, the tightening element (7a) comprises a Ω-shaped sheet made of harmonic steel, preferably coated with plastic material in order not to scrape the bicycle. Alternatively, the tightening element comprises a pair of rigid oscillating elements connected by elastic means or rubber rollers (not shown).

According to a preferred embodiment, the catching means (7) further comprise:
- a rotary support (7b), assembled on the upper end of the arm (5) and rotatable, with respect thereto, around an axis (y'), parallel to the oscillation axis (y) of the arm (5), in order to be correctly oriented with respect to the tube (8);
- a rotary hook (7c), adapted to tighten the tube (8) against the rotary support (7b).

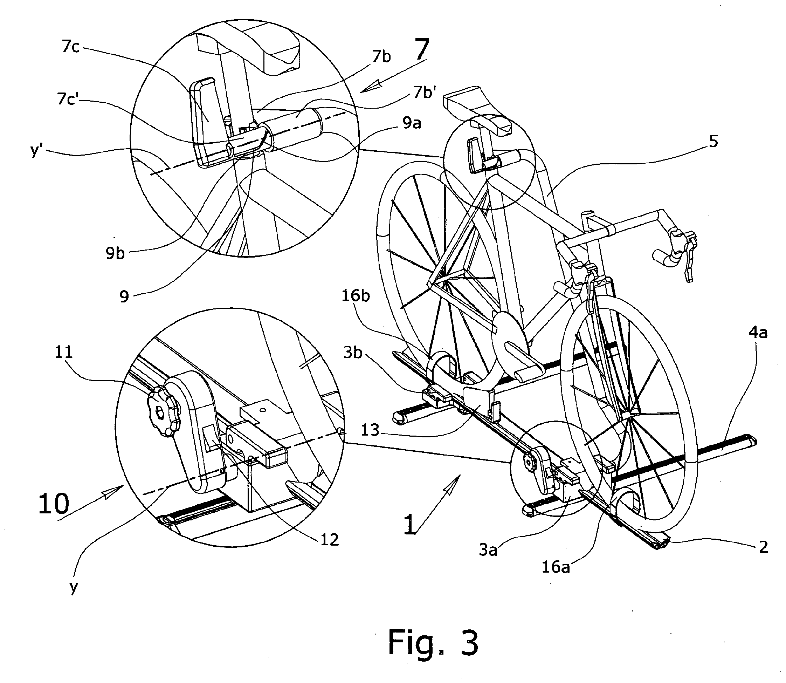

The rotary hook (7c) is assembled on the rotary support (7b), which allows the closing system to rotate and be always correctly oriented with respect to the bicycle tube, which is fastened. The rotary hook (7c) comprises a cylindrical part (7c') (Fig. 3) which is inserted in a cylindrical seat (7b'), obtained on the support (7b), the cylindrical seat having an axis (y'), namely the axis along which the support (7b) rotates. On the cylindrical part of the axis (y') a groove (9) is obtained, which comprises a first section (9a), of an helical shape, and a second section (9b), of a rectilinear shape parallel to the axis (y'). A pin (not shown), placed inside the cylindrical seat of the support (7b), engages the groove (9) so that the axial sliding of the cylindrical part of the rotary hook (7c) with respect to the cylindrical seat of the support (7b) generates, in a sequence, the rotation of the hook (7c), to align it with the support (7b), and the tightening of the tube (8) against the support (7b).

According to a preferred embodiment, the rotary hook (7c) is actuated through suitable driving means (10), placed next to the lower end of the oscillating arm (5).

According to a preferred embodiment, the driving means (10) comprise a knob (11), adapted to actuate the rotary hook (7c) through a flexible element (not shown), for example a steel wire, which slides inside the oscillating arm (5), the actuation generating the sliding of the cylindrical part (7c') of the rotary hook (7c) in the cylindrical seat (7b') of the support (7b), winning the reaction of an elastic recall element (not shown), the sliding generating, in a sequence, the rotation of the rotary hook (7c), due to the interaction of the pin present in the cylindrical seat with the groove (9), and the tightening of the tube (8) against the support (7b).

Immediately near the knob (11), a push-button (12) is placed, adapted to perform the disconnection of the tube (8), the disconnection being due to the release of the flexible element and to the action of the elastic recall means, which make the rotary hook (7c) go back and rotate, automatically freeing the bicycle. The push-button (12) is preferably equipped with a lock (not shown) in order to operate as anti-theft device.

According to a preferred embodiment, near the rear wheel (6b) of the bicycle, a slider (13) is placed, which slides on the raceway (2) and is shaped in order to have two wings adapted to embrace the rear wheel (6b) of the bicycle, in order to laterally contain the wheel itself, but also and above all to frontally contain it, in case of a sudden braking. The slider (13) is equipped with means adapted to fasten it to the raceway (2).

The blocking can be performed through a cam-type closure or with a threaded pin (not shown), actuated through a suitable knob, which press against the raceway (2) .

Once having loaded the bicycle on the bicycle carrier, it is necessary to push the slider (13) against the rear wheel (6b), while the front wheel (6a) will stop against the front support (3a). Then the two straps (16a) and (16b) will be tightened and the bicycle will be safely blocked on the bicycle carrier (1). In practice, the rear slider (13) and the front support (3a) are a pair of wedges, which perform the function of increasing the hold solidity to longitudinal stresses, operating as counteraction on the wheels.

According to a preferred embodiment (not shown), a second front slider can be provided, to be sent against the front wheel (6a), the front slider being also shaped as the rear slider (13), in order to have the two side wings which contain the wheel and are used to avoid the rotation of the front wheel (6a), which is steering.

When disassembling the bicycle, it is necessary to actuate the push-button (12), placed next to the closing knob (11), disengaging the rotary hook (7c). Now, the bicycle is still held vertically by the elastic element (7a), so that the user, after having opened the straps (16a) and (16b), must only pull the bicycle outwards, in order to win the force of the elastic element (7a).

As clearly appear from the previous description, the invention fully solves the problem of keeping the bicycle in position, allowing the user to fully safely actuate all tightening means, having both his hand free.

The invention has been described, as a non-limiting example, according to a preferred embodiment and some variations thereof. The skilled person in the field will be able to devise other embodiments, all falling within the scope of the enclosed claims.

## Claims

1. Bicycle carrier (1), adapted to transport bicycles on a car sunroof, of a type comprising:
- a raceway (2) assembled, through a front support (3a) and a rear support (3b), on a pair of sunroof bars (4a), (4b), applied to the car sunroof;
- a side arm (5), oscillating around an axis (y), which is horizontal and parallel with the sunroof bars (4), (4b) ;
- catching means (7) placed next to an upper end of the oscillating arm (5), **characterized in that** the catching means (7) comprising a tightening element (7a) adapted to form an undercut, so that, by forcing a cylindrical part (8) of the bicycle against the tightening element (7a), the tightening element (7a) opens and, by elastically closing again, the cylindrical part (8) remains blocked,
the catching means (7) further comprise:
- a rotary support (7b), assembled on an upper end of the arm (5) and rotatable, with respect thereto, around an axis (y'), parallel with an oscillation axis (y) of the arm (5), in order to be correctly oriented with respect to the cylindrical part (8);
- a rotary hook (7c) adapted to tighten the cylindrical part (8) against the rotary support (7b), the rotary hook (7c) comprising a cylindrical part (7c'), which is inserted in a cylindrical seat (7b'), obtained on the support (7b), the cylindrical seat (7b') having the same axis (y') along which the support (7b) rotates, on the cylindrical part (7c'), also with axis (y'), a groove (9) being obtained, which comprises a first section (9a), of an helical shape, and a second section (9b), of a rectilinear shape parallel with the axis (y'), inside the cylindrical seat (7b') of the support (7b) a pin being present, which engages the groove (9) so that the axial sliding of the cylindrical part (7c') of the rotary hook (7c) with respect to the cylindrical seat (7b') of the support (7b) generates, in a sequence, the rotation of the hook (7c), to align it with the support (7b), and the tightening of the cylindrical part (8) of the bicycle against the support (7b).

2. Bicycle carrier (1) according to claim 1, **characterized in that** the tightening element (7a) comprises a Ω-shaped sheet made of harmonic steel.

3. Bicycle carrier (1) according to claim 2, **characterized in that** the Ω-shaped sheet made of harmonic steel is coated with a plastic material.

4. Bicycle carrier (1) according to claim 1, **characterized in that** the tightening element (7a) comprises a pair of rigid oscillating elements connected by elastic means.

5. Bicycle carrier (1) according to claim 1, **characterized in that** the tightening element (7a) comprises a pair of rubber rollers.

6. Bicycle carrier (1) according to claim 1, **characterized in that** the rotary hook (7c) is actuated through suitable driving means (10), placed next to a lower end of the oscillating arm (5).

7. Bicycle carrier (1) according to claim 6, **characterized in that** the driving means (10) comprise a knob (11), adapted to actuate a flexible element, sliding inside the oscillating arm (5), the flexible element generating the sliding of the cylindrical part (7c') of the rotary hook (7c) in the cylindrical seat (7b') of the support (7b), winning the reaction of an elastic recall element.

8. Bicycle carrier (1) according to claim 6 or 7, **characterized in that** the driving means (10) further comprise a push-button (12), adapted to perform a disconnection of the cylindrical part (8), the disconnection being due to the release of the flexible element and the action of the elastic recall means, which make the rotary hook (7c) go back and rotate.

9. Bicycle carrier (1) according to claim 8, **characterized in that** the push-button (12) is equipped with a lock, in order to operate as anti-theft device.

10. Bicycle carrier (1) according to any one of claims 1 to 11, **characterized in that** it has one or two sliders (13), sliding on the raceway (2) and shaped in order to have two wings adapted to embrace the bicycle wheels (6a, 6b), in order to laterally contain the wheels, the sliders (13) being equipped with means adapted to fasten them onto the raceway (2).

11. Bicycle carrier (1) according to claim 10, **characterized in that** the means adapted to fasten the sliders (13) onto the raceway (2) comprise a cam-type closure or a threaded pin, which press against the raceway (2).

12. Bicycle carrier (1) according to any one of claims 1 to 11, **characterized in that** the side arm (5) comprises a metallic tube with rounded section, curved in order to form a side oscillating bearing, in order to be able to be adapted to the bicycle, the tube being assembled on the front support (3a) which, in turn, is fastened to the front sunroof carrier bar (4a) of a vehicle, the tube being equipped with slits, which allow a passage of fastening elements, such as screws or cam-type tie-rods, through the tube, allowing its rotation.

## Patentansprüche

1. Fahrradträger (1), der für den Transport von Fahrrädern auf dem Fahrzeugdach dient, der Folgendes enthält:
- einen Kanal (2), der durch eine vordere Halterung (3a) und eine hintere Halterung (3b) auf einem Paar Universalgepäckstangen (4a), (4b) montiert wird, die am Fahrzeugdach angebracht sind;
- einen seitlichen Arm (5), der um eine Achse (y) schwenkt, die horizontal und parallel zu den Universalgepäckstangen (4), (4b) ist;
- Greifvorrichtungen (7), die am oberen Ende des Schwenkarms (5) angebracht sind, und **dadurch gekennzeichnet ist, dass**
die Greifvorrichtungen (7) ein Befestigungselement (7a) enthalten, das dazu dient, eine Hinterschneidung zu bilden, sodass sich das Befestigungselement (7a) öffnet und sich elastisch wieder schließt, wenn ein zylinderförmiger Teil (8) des Fahrrades an das Befestigungselement (7a) gedrückt wird, der zylinderförmige Teil (8) wird blockiert,
die Greifvorrichtungen (7) außerdem Folgendes enthalten:
- eine Drehhalterung (7b), die an einem oberen Ende des Arms (5) montiert ist und gegenüber diesem um eine Achse (y') gedreht werden kann, die parallel zu einer Schwenkachse (y) des Arms (5) ist, sodass sie sich korrekt zum zylinderförmigen Teil (8) ausrichten kann;
- einen Drehhaken (7c), der dazu dient, den zylinderförmigen Teil (8) an der Drehhalterung (7b) zu befestigen, der Drehhaken (7c) enthält einen zylinderförmigen Teil (7c'), der sich in eine zylinderförmige Aufnahme (7b') einsetzt, die an der Halterung (7b) angebracht ist, die zylinderförmige Aufnahme (7b') hat die gleiche Achse (y'), längs der sich die Halterung (7b) dreht, am zylinderförmigen Teil (7c'), der auch der Achse (y') angehört, ist ein Nut (9) angebracht, der einen ersten schraubförmigen Abschnitt (9a) und einen zweiten geradlinigen Abschnitt (9b) enthält, der parallel zur Achse (y') liegt, intern in der zylinderförmigen Aufnahme (7b') der Halterung (7b) ist ein Bolzen vorhanden, der den Nut (9) so einspannt, dass die Axialgleitung des zylinderförmigen Teils (7c') des Drehhakens (7c) gegenüber der zylinderförmigen Aufnahme (7b') der Halterung (7b) nacheinander die Drehung des Hakens (7c), um ihn auf der Halterung (7b) auszurichten, und die Befestigung des zylinderförmigen Teils (8) des Fahrrades an der Halterung (7b) auslöst.

2. Fahrradträger (1) gemäß Patentanspruch 1, der **dadurch gekennzeichnet ist, dass** das Befestigungselement (7a) ein Ω-förmiges geformtes Blech aus harmonischem Stahl enthält.

3. Fahrradträger (1) gemäß Patentanspruch 2, der **dadurch gekennzeichnet ist, dass** das Ω-förmige geformte Blech aus harmonischem Stahl mit Kunststoff beschichtet ist.

4. Fahrradträger (1) gemäß Patentanspruch 1, der **dadurch gekennzeichnet ist, dass** das Befestigungselement (7a) ein Paar feste Schwenkelemente enthält, die durch elastische Mittel verbunden sind.

5. Fahrradträger (1) gemäß Patentanspruch 1, der **dadurch gekennzeichnet ist, dass** das Befestigungselement (7a) ein Paar Gummirollen enthält.

6. Fahrradträger (1) gemäß Patentanspruch 1, der **dadurch gekennzeichnet ist, dass** der Drehhaken (7c) durch entsprechende Manövermittel (10) angetrieben wird, die am unteren Ende des Schwenkarms (5) angebracht sind.

7. Fahrradträger (1) gemäß Patentanspruch 6, der **dadurch gekennzeichnet ist, dass** die Manövermittel (10) einen Handgriff (11) enthalten, der dazu dient, ein flexibles Gleitelement anzutreiben, das intern im Schwenkarm (5) gleitet, das flexible Element löst das Gleiten des zylinderförmigen Teils (7c') des Drehhakens (7c) in der zylinderförmigen Aufnahme (7b') der Halterung (7b) aus, indem es die Reaktion eines elastischen Rückholelements überwindet.

8. Fahrradträger (1) gemäß Patentanspruch 6 und 7, der **dadurch gekennzeichnet ist, dass** die Manövermittel (10) weiterhin einen Knopf (12) enthalten, der dazu dient, die Auslösung des zylinderförmigen Teils (8) auszuführen, die Auslösung ist auf die Freigabe des flexiblen Elements und auf die Wirkung der elastischen Rückholelemente zurückzuführen, die den Rückzug und die Drehung des Drehhakens (7c) auslösen.

9. Fahrradträger (1) gemäß Patentanspruch 8, der **dadurch gekennzeichnet ist, dass** der Knopf (12) mit einem Schloss versehen ist, um als Diebstahlschutz zu dienen.

10. Fahrradträger (1) gemäß einem der Patentansprüche von 1 bis 11, der **dadurch gekennzeichnet ist, dass** er eine oder zwei Gleitschienen (13) vorsieht, die auf dem Kanal (2) gleiten und so geformt sind, dass sie zwei Flügel aufweisen, die dazu dienen, die Räder (6a, 6b) des Fahrrades zu umfassen, sodass sie eine Seitenwand der Räder darstellen, die Gleitschienen (13) sind mit Mitteln versehen, die dazu dienen, sie auf dem Kanal (2) zu befestigen.

11. Fahrradträger (1) gemäß Patentanspruch 10, der **dadurch gekennzeichnet ist, dass** die Mittel, die dazu dienen, die Gleitschienen (13) auf dem Kanal (2) zu befestigen, einen Nockenverschluss oder einen Gewindebolzen enthalten, die an den Kanal (2) drücken.

12. Fahrradträger (1) gemäß einem der Patentansprüche von 1 bis 11, der **dadurch gekennzeichnet ist, dass** der Seitenarm (5) ein Metallrohr mit rundem Abschnitt enthält, das so gebogen ist, dass es eine seitliche Schwenkauflage bildet, sodass es sich an das Fahrrad anpassen kann, das Rohr wird an der vorderen Halterung (3a) montiert, die ihrerseits an der vorderen Universalgepäckstange (4a) des Fahrzeugs befestigt wird, das Rohr ist mit Ösen ausgestattet, die den Durchgang der Befestigungselemente wie Schrauben oder Nockenstangen durch das Rohr sowie die Drehung ermöglichen.

## Revendications

1. Porte-vélos (1), apte au transport de vélos sur le toit d'une voiture, du type comprenant :
- un rail (2) monté, à l'aide d'un support avant (3a) et un support arrière (3b), sur un couple de barres porte-tout (4a), (4b), appliquées sur le toit de la voiture ;
- un bras latéral (5), oscillant autour d'un axe (y), qui est horizontal et parallèle aux barres porte-tout (4a), (4b) ;
- des moyens de préhension (7) situés au niveau de l'extrémité supérieure du bras oscillant (5), **caractérisé en ce que**
les moyens de préhension (7) comprennent un élément de serrage (7a) apte à former une contre-dépouille, de sorte que, en forçant une partie cylindrique (8) du vélo contre l'élément de serrage (7a), ce dernier s'ouvre et quand il se referme élastiquement, la partie cylindre (8) reste bloquée,
les moyens de préhension (7) comprennent aussi :
- un support tournant (7b), monté sur une extrémité supérieure du bras (5) et pivotant, par rapport à ce dernier, autour d'un axe (y'), parallèle à un axe d'oscillation (y) du bras (5), afin de pouvoir s'orienter correctement par rapport à la partie cylindrique (8) ;
- un crochet tournant (7c) apte à serrer la partie cylindrique (8) contre le support tournant (7b) ; le crochet tournant (7c) comprend une partie cylindrique (7c') qui s'insère dans un logement cylindrique (7b'), creusé sur le support (7b) ; le logement cylindrique (7b') possède le même axe (y') le long duquel tourne le support (7b) ; sur la partie cylindrique (7c'), possédant le même axe (y'), a été creusée une rainure (9) qui comprend un premier morceau (9a), de forme hélicoïdale, et un second morceau (9b), de forme rectiligne et parallèle à l'axe (y') ; à l'intérieur du logement cylindrique (7b') du support (7b) se trouve un goujon qui engage la rainure (9) de sorte que le glissement axial de la partie cylindrique (7c') du crochet tournant (7c) par rapport au siège cylindrique (7b') du support (7b) provoque d'abord la rotation du crochet (7c), pour l'aligner au support (7b), puis le serrage de la partie cylindrique (8) du vélo contre le support (7b).

2. Porte-vélos (1), selon la revendication 1, **caractérisé en ce que** l'élément de serrage (7a) comprend une petite plaque en acier harmonique profilée en Ω.

3. Porte-vélos (1), selon la revendication 2, **caractérisé en ce que** la petite plaque en acier harmonique profilée en Ω, est revêtue en matière plastique.

4. Porte-vélos (1), selon la revendication 1, **caractérisé en ce que** l'élément de serrage (7a) comprend un couple d'éléments rigides basculants reliés par des moyens élastiques.

5. Porte-vélos (1), selon la revendication 1, **caractérisé en ce que** l'élément de serrage (7a) comprend un couple de rouleaux en caoutchouc.

6. Porte-vélos (1), selon la revendication 1, **caractérisé en ce que** le crochet tournant (7c) est actionné à l'aide de moyens de manoeuvre appropriés (10), situés au niveau d'une extrémité inférieure du bras oscillant (5).

7. Porte-vélos (1), selon la revendication 6, **caractérisé en ce que** les moyens de manoeuvre (10) comprennent un bouton (11), permettant d'actionner un élément flexible, coulissant à l'intérieur du bras oscillant (5) ; l'élément flexible en provoquant le glissement de la partie cylindrique (7c') du crochet tournant (7c) dans le logement cylindrique (7b') du support (7b), l'emporte sur la réaction d'un élément élastique de rappel.

8. Porte-vélos (1), selon la revendication 6 et 7, **caractérisé en ce que** les moyens de manoeuvre (10) comprennent également un bouton (12) permettant de décrocher la partie cylindrique (8), le décrochement est dû à la libération de l'élément flexible et à l'action des moyens élastiques de rappel qui provoquent le recul et la rotation du crochet tournant (7c).

9. Porte-vélos (1), selon la revendication 8, **caractérisé en ce que** le bouton (12) est doté d'une serrure antivol.

10. Porte-vélos (1), selon l'une des revendications de 1 à 11, **caractérisé en ce qu'**il possède une ou deux glissières (13), coulissant sur le rail (2), profilées de sorte à présenter deux ailes aptes à enlacer les deux roues (6a, 6b) du vélo, de sorte à constituer une retenue latérale des roues ; les glissières (13) sont pourvues de moyens aptes à les fixer sur le rail (2).

11. Porte-vélos (1), selon la revendication 10, **caractérisé en ce que** les moyens aptes à fixer les glissières (13) sur le rail (2) comprennent une fermeture à came ou un goujon fileté, qui font pression contre le rail (2).

12. Porte-vélos (1), selon l'une des revendications de 1 à 11, **caractérisé en ce que** le bras latéral (5) comprend un tube métallique à section ronde, courbé de sorte à former un appui latéral oscillant, pour pouvoir s'adapter au vélo ; le tube est monté sur le support avant (3a) qui, à son tour, est fixé à la barre porte-tout avant (4a) de la voiture ; le tube est doté de trous assurant le passage des éléments de fixation, tels que les vis ou les tirants à came, à travers le tube, pour permettre sa rotation.
